# FASCICULE DE BREVET EUROPEEN

(11) **EP 2 487 111 B1**
(45) Date de publication et mention de la délivrance du brevet: **04.12.2013**
(21) Numéro de dépôt: 12155204.6
(22) Date de dépôt: 13.02.2012
(51) Int. Cl.: B64D 33/08

(54) **Dispositif de ventilation d'un compartiment de moteur d'aéronef**
Vorrichtung zur Belüftung eines Raums eines Flugzeugtriebwerkes
Device for ventilating a compartment of an aircraft engine

(30) Priorité: 14.02.2011 FR 1151187
(43) Date de publication de la demande: 15.08.2012
(73) Titulaire: Airbus Opérations SAS, 31060 Toulouse (FR)
(72) Inventeur: Sommerer, Yannick, 31700 Cornebarrieu (FR)
(74) Mandataire: Gevers France

(56) Documents cités:
- DE-C- 669 746
- DE-C- 935 296
- FR-A1- 2 879 564
- US-A1- 2010 317 277

## Description

### Domaine technique

L'invention concerne le domaine de la ventilation d'un compartiment, c'est-à-dire d'un volume défini par une pluralité de cloisons, par circulation d'un flux d'air dans ledit compartiment. L'invention vise plus particulièrement à assurer la ventilation d'au moins un compartiment d'un moteur d'aéronef par circulation d'un flux d'air prélevé à l'extérieur du moteur.

Un moteur d'aéronef comporte de manière classique une pluralité de compartiments qui doivent être ventilés afin d'assurer par exemple le refroidissement de composants situés dans le compartiment ou renouveler l'air pour évacuer hors du compartiment d'éventuelles vapeur de combustible.

Pour renouveler l'air dans un compartiment du moteur, il est nécessaire de prélever un flux d'air en dehors du compartiment, le guider à l'intérieur du compartiment et enfin l'orienter dans ledit compartiment pour atteindre le but recherché (refroidissement, évacuation de vapeurs de combustible, etc.). A cet effet, un dispositif de ventilation traditionnel se présente, de manière connue, sous la forme d'un élément monobloc comportant un collecteur d'air pour collecter un flux d'air en dehors du compartiment, un diffuseur d'air pour guider le flux d'air collecté dans le compartiment et un distributeur d'air pour orienter le flux d'air dans le compartiment. Le distributeur d'un dispositif de ventilation peut se présenter sous diverses formes afin d'orienter le flux d'air de manière précise dans le compartiment.

De manière classique, le flux d'air est capté par le collecteur d'air par différence de pression entre la pression d'air à l'extérieur et la pression d'air à l'intérieur du compartiment. Pour ventiler le compartiment de manière optimale, le dispositif de ventilation doit collecter un débit d'air important tout en limitant les pertes de charges dans les différentes parties du dispositif, c'est-à-dire, le collecteur, le diffuseur et le distributeur d'air.

### Etat de la technique

Un des inconvénients principaux d'un dispositif de ventilation selon l'art antérieur (voir par exemple le document FR 2 879 564) réside dans le fait que le distributeur d'air engendre des pertes de charge importantes, ce qui pénalise les performances du dispositif de ventilation et, plus généralement, celles de l'aéronef.

Pour éliminer cet inconvénient et conserver un débit d'air important tout en tenant compte des pertes engendrées par le distributeur, une solution consiste à augmenter les dimensions de la prise d'air du collecteur d'air. Cependant, une telle solution présente comme inconvénient d'augmenter la traînée parasite relative au collecteur ce qui diminue les performances de l'aéronef.

En pratique, le distributeur d'air est configuré de manière à orienter le flux d'air dans le compartiment tout en limitant les pertes de charge. Autrement dit, la configuration du distributeur d'air résulte d'un compromis entre l'angle de déviation du flux d'air assurant la répartition d'air dans le compartiment et les pertes de charges engendrées par cette déviation. Pour compenser ce défaut de ventilation, on injecte de manière classique un surplus d'agent extincteur dans le compartiment du moteur afin d'assurer une protection optimale contre l'incendie. Cependant, cela nécessite d'augmenter les dimensions et la masse du système d'extinction d'incendie et, par voie de conséquence, celles de l'aéronef ce qui présente un inconvénient.

### Exposé de l'invention

L'invention est née à l'origine pour la ventilation d'un compartiment d'un moteur d'aéronef mais elle s'applique de manière générale à la ventilation de tout compartiment dans lequel un flux d'air doit être orienté de manière optimale.

Afin d'éliminer au moins certains de ces inconvénients, l'invention concerne un ensemble d'une nacelle d'aéronef et d'un moteur d'aéronef monté dans ladite nacelle de manière à former au moins un compartiment entre le moteur et la nacelle, ledit ensemble comportant un dispositif de ventilation du compartiment, le dispositif comportant un collecteur d'air adapté pour capter un flux d'air à l'extérieur dudit compartiment, un diffuseur d'air adapté pour guider ledit flux d'air à l'intérieur dudit compartiment, et un distributeur d'air adapté pour répartir le flux d'air à l'intérieur dudit compartiment, dispositif dans lequel le distributeur d'air est déporté par rapport au diffuseur d'air, le distributeur d'air étant disposé à l'intérieur du compartiment à distance du diffuseur d'air.

Etant donné que le distributeur d'air est déporté par rapport au diffuseur d'air, le flux d'air est distribué dans le compartiment par le distributeur à la pression d'air du compartiment et non plus à la pression d'air du diffuseur ce qui diminue les pertes de charge du dispositif de ventilation.

En outre, comme le distributeur est indépendant du diffuseur, on peut avantageusement dimensionner et configurer le distributeur d'air à sa guise afin de guider et répartir le flux d'air dans les zones souhaitées du compartiment.

De préférence, le distributeur d'air est disposé en regard du diffuseur d'air dans le compartiment ce qui permet de distribuer de manière optimale le flux d'air collecté. Le flux d'air issu du diffuseur est ainsi directement guidé vers le distributeur pour être orienté dans le compartiment.

De manière préférée, le diffuseur d'air étant configuré pour guider le flux d'air selon une direction de diffusion rectiligne, le distributeur d'air est disposé dans la direction de diffusion rectiligne. Le flux d'air est distribué par le dispositif de ventilation de l'invention de manière sensiblement identique à un dispositif de ventilation selon l'art antérieur ce qui est très avantageux, seules les pertes de charge étant diminuées.

De préférence, les parois du distributeur d'air sont distantes d'au moins 1 cm des parois du diffuseur d'air afin de permettre une distribution du flux d'air limitant les pertes de charge liées au distributeur. De préférence encore, les parois du distributeur d'air sont distantes des parois du diffuseur d'air d'une distance comprise entre 3 et 6cm afin d'assurer un compromis entre une limitation des pertes de charge du distributeur et une orientation optimale du flux d'air.

Selon un aspect de l'invention, le distributeur d'air comporte des aubes agencées pour distribuer le flux d'air verticalement et horizontalement. Ainsi, le flux d'air est réparti dans le compartiment en fonction du but recherché. Comme le distributeur est indépendant du diffuseur, la configuration de l'aubage du distributeur est libre ce qui améliore la qualité du guidage du flux d'air par le distributeur.

De préférence, le distributeur d'air est solidaire d'une paroi du compartiment. Ainsi, contrairement à l'art antérieur dans lequel le diffuseur et le distributeur forment un élément monobloc, le distributeur est déporté du diffuseur et solidaire d'une paroi du compartiment. En positionnant le distributeur de manière précise par rapport au compartiment, on guide de manière précise le flux d'air dans le compartiment.

Le distributeur du dispositif de ventilation est ainsi positionné dans le compartiment formé entre la nacelle et le moteur ce qui permet de ventiler de manière efficace les vapeurs de carburant lorsque l'aéronef est en vol.

Selon un premier aspect, le distributeur du dispositif de ventilation est fixé de manière solidaire à la nacelle, de préférence, au capot de la nacelle. Le distributeur peut ainsi résister aux vibrations lors du vol de l'aéronef. Selon un deuxième aspect, le distributeur du dispositif de ventilation est fixé de manière solidaire au moteur, de préférence, au carter du moteur.

### Brève description des figures

L'invention sera mieux comprise à la lecture de la description qui va suivre, donnée uniquement à titre d'exemple, et se référant aux dessins annexés sur lesquels :
- la figure 1 représente une vue en coupe schématique d'un moteur d'avion avec un dispositif de ventilation selon l'invention ; et
- la figure 2 représente une vue en perspective schématique d'un dispositif de ventilation selon une forme préférée de l'invention.

### Description détaillée

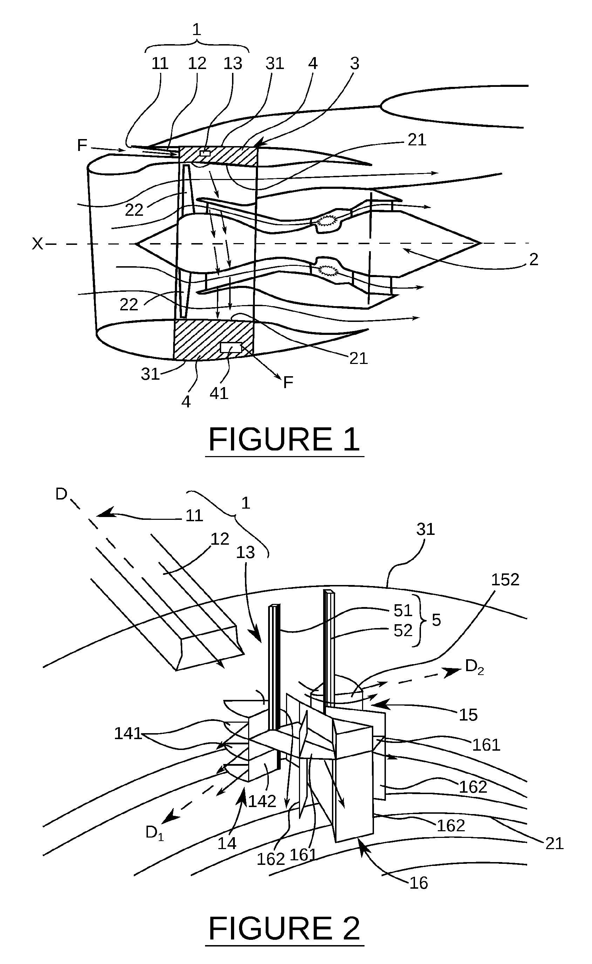

Un dispositif de ventilation 1 selon l'invention va être présenté par la suite pour la ventilation d'un compartiment 4 d'un moteur d'aéronef 2, le moteur 2 s'étendant selon une direction axiale X représentée sur la figure 1. Dans cet exemple, le moteur 2 étant monté dans une nacelle 3, le dispositif de ventilation 1 selon l'invention est agencé pour ventiler un compartiment 4 délimité par le carter 21 du moteur 2 et par le capot 31 de la nacelle 3. Le compartiment 4, représenté en traits hachurés sur la figure 1, forme un volume annulaire situé entre le carter 21 du moteur 2 et la nacelle 3. Dans cet exemple, le compartiment 4 est délimité intérieurement par le carter de soufflante du moteur 2 dans lequel sont entraînées des aubes de soufflante 22.

Comme représenté de manière schématique sur la figure 1, le dispositif de ventilation 1, situé dans une partie supérieure du compartiment 4, comporte un collecteur d'air 11 adapté pour capter un flux d'air F à l'extérieur du moteur 2, un diffuseur d'air 12 adapté pour guider ledit flux d'air F à l'intérieur du compartiment 4 et un distributeur d'air 13 adapté pour répartir le flux d'air F à l'intérieur dudit compartiment 4. Par souci de clarté, la ventilation du compartiment par circulation du flux d'air F est représentée à l'aide de flèches en traits pleins sur les figures 1 à 2. Après avoir circulé dans le compartiment 4, le flux d'air F est expulsé hors du compartiment 4 par une sortie d'air 41 située dans une partie inférieure du compartiment 4 comme représenté sur la figure 1.

Dans cet exemple, le collecteur d'air 11 permet de capter un flux d'air F par différence de pression d'air entre l'extérieur et l'intérieur du compartiment 4, le flux d'air capté F est ensuite conduit par le diffuseur 12 dans le compartiment 4. A cet effet, comme représenté sur les figures 1 et 2, le diffuseur 12 possède une forme tubulaire et est solidaire du collecteur 11. De manière préférée, le collecteur 11 et le diffuseur 12 forment un ensemble monobloc.

Le distributeur 13 du dispositif de ventilation 1 est déporté du diffuseur 12 comme représenté sur les figures 1 et 2 de manière à diminuer les pertes de charge au cours de la ventilation. En référence à la figure 1, le distributeur 13 est disposé dans le compartiment 4 à distance du diffuseur 12. De préférence, les parois du diffuseur 12 sont distantes des parois du distributeur 13 d'une distance au moins égale à 1 cm, de préférence comprise entre 3cm et 6cm.

Ainsi, le flux d'air F est distribué dans le compartiment 4 à la pression d'air du compartiment 4 et non plus à la pression du diffuseur 12 ce qui permet de limiter la perte de charge liée à la distribution d'air. En outre, le distributeur 13 est indépendant du diffuseur 12 ce qui autorise une plus grande liberté dans le positionnement et le dimensionnement du distributeur 13 par comparaison à un dispositif de ventilation selon l'art antérieur.

Dans cet exemple, le distributeur 13 est relié par des moyens de fixation 5 au capot 31 de la nacelle 3, le capot 31 présentant ainsi une résistance importante aux vibrations ce qui est avantageux. Il va de soi que le distributeur 13 pourrait également être monté sur le carter 21 du moteur 2 de manière à limiter la longueur des moyens de fixation 5 du distributeur 13.

En référence à la figure 2, le distributeur 13 est monté en regard du diffuseur 11 afin que le flux d'air F issu du diffuseur 12 soit guidé directement vers le distributeur 13 dans le compartiment 4. Dans cet exemple, le diffuseur 12 se présente sous la forme d'une canalisation tubulaire s'étendant selon un axe de diffusion D, le distributeur 13 étant disposé dans l'axe de diffusion D comme représenté sur la figure 2.

Le distributeur 13 du dispositif de ventilation 1 peut se présenter sous diverses formes afin de répartir le flux d'air F dans le compartiment 4 en fonction du but recherché. En référence à la figure 2, le distributeur 13 comporte une pluralité de modules de distribution 14, 15, 16 reliés au capot 31 de la nacelle 3 par des moyens de fixation 5 se présentant, dans cet exemple, sous la forme de tiges verticales 51, 52 de manière à positionner le distributeur 13 dans l'axe de diffusion D. L'invention est présentée, à titre d'exemple, pour un distributeur 13 fixé au capot 31 de la nacelle 3 mais le distributeur 13 pourrait être relié à toute paroi du compartiment 4, telle que le carter 21 du moteur 2 ou un équipement du moteur 2 situé dans le compartiment 4, de manière à limiter la longueur des moyens de fixation 5.

Comme représenté sur la figure 2, le premier module de distribution 14, relié à la première tige verticale 51, comporte une pluralité d'aubes horizontales 141 de manière à répartir le flux d'air F selon la direction verticale. Les aubes horizontales 141 du premier module de distribution 14 sont solidaires d'une aube verticale 142, solidaire de la première tige verticale 51, dont la fonction est de modifier l'orientation incidente du flux d'air F. En référence à la figure 2, le premier module de distribution 14 modifie l'orientation incidente du flux d'air F dans une première direction de distribution D1 tout en répartissant le flux d'air F selon la direction verticale.

De manière similaire, le deuxième module de distribution 15, relié à la deuxième tige verticale 52, comporte une pluralité d'aubes horizontales (non visibles sur la figure 2) de manière à répartir le flux d'air F selon la direction verticale. Les aubes horizontales du deuxième module de distribution 15 sont solidaires d'une aube verticale 152, solidaire de la deuxième tige verticale 52, dont la fonction est de modifier l'orientation incidente du flux d'air F. En référence à la figure 2, le deuxième module de distribution 15 modifie l'orientation incidente du flux d'air F dans une deuxième direction de distribution D2 tout en répartissant le flux d'air F selon la direction verticale.

Le troisième module de distribution 16 est ici disposé entre les premier et deuxième modules de distribution 14, 15 et est relié aux deux tiges verticales 51, 52. Le troisième module de distribution 16 comporte une pluralité d'aubes horizontales 161 et d'aubes verticales 162 de manière répartir le flux d'air incident F selon une pluralité de directions de distribution.

Dans cet exemple, les aubes des modules de distribution 14, 15, 16 sont planes mais il va de soi qu'elles pourraient présenter des courbures diverses afin de guider le flux d'air F aux endroits souhaités du compartiment 4. En outre, l'orientation desdites aubes est déterminée en fonction de la position relative du diffuseur 12 par rapport au distributeur 13 afin de garantir un guidage optimal du flux d'air F dans le compartiment 4.

Dans cet exemple, les aubes verticales 162 du troisième module de distribution 16 sont disposées de manière à ce que le flux d'air F se divise équitablement entre les premier et deuxième modules de distribution 14, 15. Il va de soi que les aubes verticales et horizontales du dispositif de ventilation 1 peuvent être disposées de manière à privilégier une ventilation d'une partie du compartiment 4 ou créer, par exemple, un écoulement dirigé d'un seul côté du compartiment, dissymétrique ou tournant. Le dimensionnement des aubes, le positionnement relatif des aubes les unes par rapport aux autres permet de distribuer tout ou partie du flux d'air F dans des parties choisies du compartiment 4.

Le dispositif de ventilation 1 selon l'invention diminue les pertes de charge liées au distributeur 13 ce qui permet d'augmenter l'efficacité de la ventilation. De manière avantageuse, on peut diminuer les dimensions du collecteur 11 et ainsi limiter la traînée parasite de l'aéronef.

## Revendications

1. Ensemble d'une nacelle d'aéronef (3) et d'un moteur d'aéronef (2) monté dans ladite nacelle (3) de manière à former au moins un compartiment (4) entre le moteur (2) et la nacelle (3), ledit ensemble comportant un dispositif de ventilation (1) du compartiment (4), le dispositif comportant :
- un collecteur d'air (11) adapté pour capter un flux d'air (F) à l'extérieur dudit compartiment (4),
- un diffuseur d'air (12) adapté pour guider ledit flux d'air (F) à l'intérieur dudit compartiment (4), et
- un distributeur d'air (13) adapté pour répartir le flux d'air (F) à l'intérieur dudit compartiment (4),
dispositif **caractérisé en ce que** le distributeur d'air (13) est déporté par rapport au diffuseur d'air (12), le distributeur d'air (13) étant disposé à l'intérieur du compartiment (4) à distance du diffuseur d'air (12).

2. Ensemble selon la revendication 1, dans lequel le distributeur d'air (13) est disposé en regard du diffuseur d'air (12) dans le compartiment (4).

3. Ensemble selon l'une des revendications 1 à 2, dans lequel le diffuseur d'air (12) étant configuré pour guider le flux d'air (F) selon une direction de diffusion rectiligne D, le distributeur d'air (13) est disposé dans la direction de diffusion rectiligne D.

4. Ensemble selon l'une des revendications 1 à 2, dans lequel les parois du distributeur d'air (13) sont distantes d'au moins 1cm des parois du diffuseur d'air (12).

5. Ensemble selon la revendication 4, dans lequel les parois du distributeur d'air (13) sont distantes des parois du diffuseur d'air (12) d'une distance comprise entre 3 et 6cm.

6. Ensemble selon l'une des revendications 1 à 2, dans lequel le distributeur d'air (13) comporte des aubes (141, 142, 152, 161, 162) agencées pour distribuer le flux d'air (F) verticalement et horizontalement.

7. Ensemble selon l'une des revendications 1 à 2, dans lequel le distributeur d'air (13) est solidaire d'une paroi du compartiment (4).

8. Ensemble selon l'une des revendications 1 à 2, dans lequel le distributeur (13) du dispositif de ventilation (1) est fixé de manière solidaire à la nacelle (3), de préférence, au capot (31) de la nacelle (3).

9. Ensemble selon l'une des revendications 1 à 2, dans lequel le distributeur (13) du dispositif de ventilation (1) est fixé de manière solidaire au moteur (2), de préférence, au carter (21) du moteur (2).

## Patentansprüche

1. Einheit aus einer Luftfahrzeuggondel (3) und einem Luftfahrzeugmotor (2), der so in der Gondel (3) angebracht ist, dass mindestens ein Raum (4) zwischen dem Motor (2) und der Gondel (3) gebildet ist, wobei die Einheit eine Ventilationsvorrichtung (1) für den Raum (4) umfasst, wobei die Vorrichtung umfasst:
- einen Luftkollektor (11), der dazu angepasst ist, einen Luftstrom (F) außerhalb des Raums (4) aufzunehmen,
- einen Luftdiffusor (12), der dazu angepasst ist, den Luftstrom (F) in das Innere des Raums (4) zu leiten, und
- einen Luftverteiler (13), der dazu angepasst ist, den Luftstrom (F) im Inneren des Raums (4) zu verteilen,
wobei die Vorrichtung **dadurch gekennzeichnet ist, dass** der Luftverteiler (13) in Bezug auf den Luftdiffusor (12) versetzt ist, wobei der Luftverteiler (13) im Inneren des Raums (4) in einem Abstand vom Luftdiffusor (12) angeordnet ist.

2. Einheit nach Anspruch 1, wobei der Luftverteiler (13) dem Luftdiffusor (12) in dem Raum (4) zugewandt angeordnet ist.

3. Einheit nach einem der Ansprüche 1 bis 2, wobei der Luftdiffusor (12) dazu ausgelegt ist, den Luftstrom (F) entlang einer geradlinigen Diffusionsrichtung D zu leiten, wobei der Luftverteiler (13) in der geradlinigen Diffusionsrichtung D angeordnet ist.

4. Einheit nach einem der Ansprüche 1 bis 2, wobei die Wände des Luftverteilers (13) um mindestens 1 cm von den Wänden des Luftdiffusors (12) entfernt sind.

5. Einheit nach Anspruch 4, wobei die Wände des Luftverteilers (13) um einen 3 bis 6 cm betragenden Abstand von den Wänden des Luftdiffusors (12) entfernt sind.

6. Einheit nach einem der Ansprüche 1 bis 2, wobei der Luftverteiler (13) Schaufeln (141, 142, 152, 161, 162) umfasst, die dazu eingerichtet sind, den Luftstrom (F) vertikal und horizontal zu verteilen.

7. Einheit nach einem der Ansprüche 1 bis 2, wobei der Luftverteiler (13) fest mit einer Wand des Raums (4) verbunden ist.

8. Einheit nach einem der Ansprüche 1 bis 2, wobei der Verteiler (13) der Ventilationsvorrichtung (1) fest an der Gondel (3), vorzugsweise an der Haube (31) der Gondel (3), fixiert ist.

9. Einheit nach einem der Ansprüche 1 bis 2, wobei der Verteiler (13) der Ventilationsvorrichtung (1) fest am Motor (2), vorzugsweise am Gehäuse (21) des Motors (2), fixiert ist.

## Claims

1. Assembly composed of an aircraft nacelle (3) and an aircraft engine (2) mounted in the nacelle(3) so as to create at least one comportment(4) between the engine (2) and the nacelle (3), the assembly including a ventilation device (1) for the compartment (4), the device including:
- an air intake (11) adapted to capture an air flow (F) outside the compartment (4),
- an air diffuser (12) adapted to guide the air flow (F) into the compartment, and
- an air distributor (13) adapted to distribute the air flow (F) within the compartment (4),
the device being **characterized in that** the air distributor (13) is separated from the air diffuser (12), the air distributor (13) being positioned within the compartment (4) at a distance from the air diffuser (12).

2. Assembly according to Claim 1, in which the air distributor (13) is positioned facing the air diffuser (12) in the compartment (4).

3. Assembly aocording to either of Claims 1 and 2, in which, since the air diffuser (12) is configured to guide the air flow (F) in a rectilinear direction of diffusion D, the air distributor (13) is positioned in the rectilinear direction of diffusion D.

4. Assembly according to either of Claims 1 and 2, in which the walls of the air distributor (13) are at a distance of at least 1 cm from the walls of the air diffuser (12).

5. Assembly according to Claim 4, in which the walls of the air distributor (13) are at a distance of between 3 and 6 cm from the walls of the air diffuser (12).

6. Assembly according to either of Claims 1 and 2, in which the air distributor (13) includes vanes (141,142,152,161,162) arranged to distribute the air flow (F) vertically and horizontally.

7. Assemble according to either of Claims 1 and 2, in which the air distributor (13) is fixed to a wall of the compartment (4).

8. Assembly according to either of Claims 1 and 2, in which the distributor (13) of the ventilation device (1) is fixed to the nacelle (3), preferably to the cowling (31) of the nacelle (3).

9. Assemble according to either of Claims 1 and 2, in which the distributor (13) of the ventilation device (1) is fixed to the engine (2), preferably to the casing (21) of the engine (2).
